# EUROPEAN PATENT SPECIFICATION

(11) **EP 3 578 033 B1**
(45) Date of publication and mention of the grant of the patent: **05.05.2021**
(21) Application number: 19167385.4
(22) Date of filing: 04.04.2019
(51) Int. Cl.: A01D 43/063

(54) **GRASS MOWING MACHINE**
RASENMÄHER
TONDEUSE À GAZON

(30) Priority: 08.06.2018 JP 2018110533
(43) Date of publication of application: 11.12.2019
(73) Proprietor: Kubota Corporation, Osaka-shi, Osaka 556-8601 (JP)
(72) Inventor: SUGIO, Akihito, SAKAI-SHI, OSAKA, 590-0823 (JP); FUJII, Shunsuke, SAKAI-SHI, OSAKA, 590-0823 (JP)
(74) Representative: Cabinet Beau de Loménie

(56) References cited:
- US-A- 3 974 631
- US-A- 6 089 006
- US-B2- 9 706 710

## Description

### TECHNICAL FIELD

This invention relates to a grass mowing machine configured to cut (mow) grass (lawn) or the like while being self-propelled and to store cut grass clippings in a grass collecting container mounted on a machine body.

### BACKGROUND ART

Patent Document 1 discloses a grass mowing machine configured to cut (mow) grass (lawn) or the like while being self-propelled and to store cut grass clippings in a grass collecting container provided at a rear portion of a traveling machine body. This grass mowing machine disclosed in Patent Document 1 includes a mower unit provided under the traveling machine body. As a blade unit disposed inside the mower unit is rotatably driven, a grass cutting operation in a grass land or a lawn land is carried out. Cut grass clippings are stored in the grass collecting container via a conveyer duct. The grass collecting container can generally be a box-like container for instance, and the conveyer duct is connected to e.g. an upper portion of the grass collecting container. Thus, grass clippings conveyed through the conveyer duct will be charged one after another into the grass collecting container via an opening formed at the upper portion of the grass collecting container and stored in this container.

Patent Document 2 discloses a Grass collector preventing clippings discharged to the outside.

### BACKGROUND ART DOCUMENT

### Patent Document

Patent Document 1: Japanese Unexamined Patent Application Publication No. 2015-92844
Patent Document 2: United States Patent N° 9,706,710

### SUMMARY

### Problem to be Solved by Invention

With the grass mowing machine of Patent Document 1, grass clippings are charged via the opening formed at the upper portion of the grass collecting container. However, due to the gravity of these grass clippings charged one after another, these will be accumulated at a certain position on the bottom inside the grass collecting container. Therefore, if such progressive accumulation of grass clippings occurs on the side near the conveying duct in the grass collecting container, even if an area where no grass clippings are stored yet exists on the far side in the grass collecting container, the opening of the grass collecting container can be blocked. In this case, although the grass collecting container is not fully charged yet, introduction of further grass clippings from the conveyer duct to the grass collecting container becomes difficult.

Then, the object of the present invention is to provide a grass mowing machine capable of storing cut grass clippings in its grass collecting container in an efficient manner.

### Solution

According to a characterizing feature of a grass mowing machine relating to the present invention, the grass mowing machine comprises:
a traveling machine body;
a mower unit supported to the traveling machine body;
a grass collecting container supported to the traveling machine body and configured to store grass clippings cut by the mower unit;
a conveyer duct provided between the mower unit and the grass collecting container and configured to allow passage of the grass clippings therethrough;
a guide member for guiding the grass clippings, the guide member being provided inside the grass collecting container at a position opposed to a charging inlet of the grass collecting container corresponding to a grass collecting container side end of the conveyer duct; and
a posture changing mechanism for changing posture of the guide member.

The grass collecting container includes an air communication portion for allowing communication of air from the inside of the grass collecting container to the outside; and
an air amount adjustment mechanism is provided for adjusting an amount of air which flows through the air communication portion.

With the above-described arrangement, the grass clippings from the mower unit will have their flow controlled by the guide member when they are introduced into the grass collecting container via the charging inlet of this grass collecting container through the conveyor duct. Since this guide member is configured such that its posture can be varied by the posture changing mechanism, the flow of grass clippings within the grass collecting container can be controlled. As the flow of the grass clippings is controlled by changing the posture of the guide member, the grass clippings can be stored sequentially from the far side away from the charging inlet of the grass collecting container. Therefore, it is possible to avoid such situation of the charging inlet of the grass collecting container being blocked with space still remaining for storage of further grass clippings inside the grass collecting container.
With the above-described arrangement, with provision of the air communication portion, air which has conveyed grass clippings to the grass collecting container can be discharged to the outside of the grass collecting container via this air communication portion. With this, convection of air which has conveyed grass clippings to the grass collecting container, inside this grass collecting container can be effectively suppressed, so that with such effective suppression of convection of grass clippings, the grass clippings can be stored in the grass collecting container.

Further, with provision of the air amount adjustment mechanism at the air communication portion, it is possible to adjust the amount of air to be discharged to the outside of the grass collecting container via the air communication portion. With this, for example, the amount of air to be discharged to the outside of the grass collecting container can be adjusted by such a degree that allows efficient storage of grass clippings inside the grass collecting container.

Further, as the posture of the guide member is changeable, the posture of the guide member can be changed according to the state of the grass clippings for instance. For instance, when grass clippings are wet and heavy, the posture of the guide member will be changed to follow the flow of grass clippings from the conveyer duct. For instance, the guide member will have its posture changed to follow a ceiling face wall of the grass collecting container. With this, the flow of grass clippings will hardly be impeded by the guide member. Therefore, even when grass clippings are wet, these grass clippings can be stored sequentially from the far side of the grass collecting container. On the other hand, when grass clippings are dry and light, the posture of the guide member will be changed in such a manner that the grass clippings will be stored sequentially from the far side of the grass collecting container as these grass clippings fed from the conveyer duct collide the guide member. For instance, the posture of the guide member will be adjusted such that the plate face of this guide member may be oriented approximately parallel with the charging plane of the charging inlet of the grass collecting container. In this, the posture of the guide member will be adjusted such that the direction of the grass clippings and the air current from the charging inlet may intersect the plate face of the guide member. Preferably, this adjustment will be made such that the vertical orientation of the plate face of the guide member may be directed toward the more far side of the grass collecting container from the upper side to the lower side. Thus, even when the grass clippings are dry, these grass clippings will be sequentially stored in the grass collecting container from the far side with effective suppression of convection thereof inside the grass collecting container. As a result, grass clippings can be stored in the grass collecting container in an efficient manner.

According to a further characterizing feature of the grass mowing machine relating to the present invention, in response to change of the posture of the guide member a distance between the charging inlet of the grass collecting container and the guide member can be changed.

With the above-described arrangement, as the distance between the charging inlet of the grass collecting container and the guide member can be changed, the flow of grass clippings can be adjusted, so that adjustment for allowing grass clippings to be stored sequentially from further far side of the grass collecting container is made possible.

According to a further characterizing feature of the grass mowing machine relating to the present invention:
a grass collecting container side end portion of the conveyer duct is connected to the charging inlet which is formed in a front face wall of the grass collecting container;
the guide member is provided rearwardly of the charging inlet of the grass collecting container; and
the posture changing mechanism supports the guide member pivotally about a pivot axis which extends in a width direction of the traveling machine body.

With the above-described arrangement, since the guide member is pivotable about the pivot axis extending in the width direction of the traveling machine body, it is possible to adjust a degree (amount) of contact between the grass clippings introduced into the grass collecting container from the conveyer duct and the guide member. Moreover, the posture change of the guide member can be realized with the simple arrangement of pivoting.

According to a still further characterizing feature of the grass mowing machine relating to the present invention:
the air communication portion is formed by an inner wall that extends from a ceiling face wall to a rear face wall of the grass collecting container and a partition member provided along the inner wall; and
a front end of the partition member is located rearwardly of a front end of the ceiling face wall.

According to a still further characterizing feature of the grass mowing machine relating to the present invention, the air amount adjustment mechanism is attached at its one end to the inner wall to be pivotable.

### BRIEF DESCRIPTION OF THE DRAWINGS

Fig. 1 is a side view showing a grass mowing machine in its entirety,
Fig. 2 is a plan view showing the grass mowing machine in its entirety,
Fig. 3 is a schematic diagram schematically showing an air communication portion and an air amount adjustment mechanism provided in a grass collecting container, and
Fig. 4 is a side view showing a grass mowing machine relating to a further embodiment in its entirety.

### EMBODIMENTS

### [Embodiments]

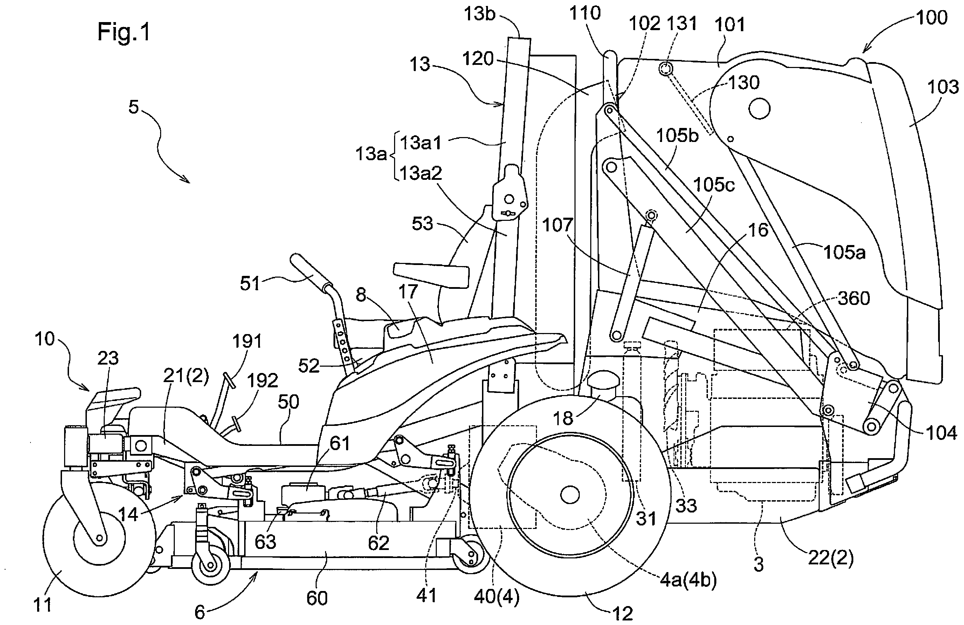

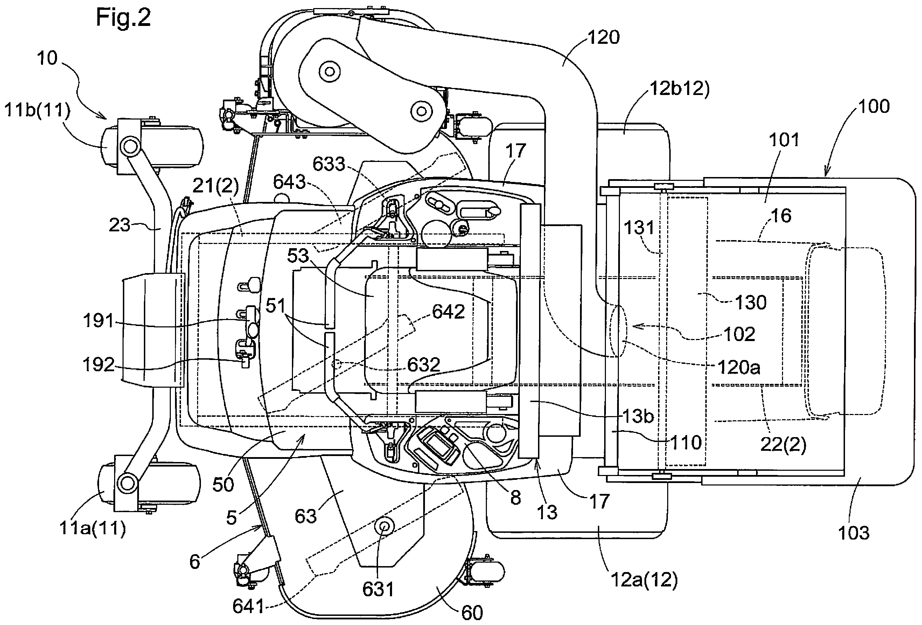

Before specific embodiments of a grass mowing machine according to the invention are explained, basic arrangements which characterize the present invention will be briefly explained with reference to Fig. 1 and Fig. 2. Incidentally, unless indicated otherwise, a front/rear direction described in this detailed description refers to a longitudinal direction of a machine body which is the traveling direction of the riding grass mowing machine (vehicle) and a transverse direction (horizontal direction) or a left/right direction refers to the direction that horizontally intersects the machine body longitudinal direction, and a vertical direction or a height direction refers to the normal direction to the ground surface or the machine body horizontal plane.

In a grass mowing machine shown in Fig. 1 and Fig. 2, there is provided a machine body frame 2 that extends in the front/rear direction of a traveling machine body 10. The machine body frame 2 of the traveling machine body 10 consists of a front frame 21 having a wide width and a rear frame 22 having a narrow width. The front frame 21 and the rear frame 22 consist of a pair of left and right longitudinal beams extending along the machine body front/rear direction and a cross beam interconnecting the longitudinal beams. The lateral width of the front frame 21 (the distance between the left and right longitudinal beams) is greater than the lateral width of the rear frame 22, with a front portion of the rear frame 22 entering a rear portion of the front frame 21 as seen in a plan view and connected to each other via an unillustrated connecting member.

Forwardly of and rearwardly of the machine body frame 2, there are respectively provided a pair of left and right front wheels 11 (a left front wheel 11a, a right front wheel 11b) and a pair of left and right rear wheels 12 (a left rear wheel 12a, a right rear wheel 12b), with the machine body frame 2 being supported on the ground by these front wheels 11 and rear wheels 12. The pair of front wheels 11 are connected to each other via a front wheel connecting arm 23. The pair of rear wheels 12 are connected to each other via a rear wheel connecting arm (not shown). The grass mowing machine schematically shown in Fig. 1 is a grass mowing machine referred to as a mid-mount zero-turn mower, with the rear wheels 12 being rotatably driven, the front wheels 11 being rotated according to the rotational driving of the rear wheels 12.

At a front portion of the machine body frame 2, a driving section 5 is disposed. At a rear portion of the driving section 5, there is provided a hood 16 constituting an engine room. Inside the hood 16, an engine 3 is disposed. And, forwardly and slightly downwardly of the engine 3, a transmission 4 is disposed. Inside the hood 16, there are further provided a cooling fan 33 and a radiator 31 disposed in this order toward the front side of the engine 3. Further, inside the hood 16, there is disposed a muffler 360 which is disposed along the machine body front/rear direction so as to discharge exhaust gas introduced from the front side to the rear side.

Further, between the front wheels 11 and the rear wheels 12 of the machine body frame 2, a mower unit 6 for cutting (mowing) grass (lawn), etc. is suspended from the machine body frame 2 via a link mechanism 14. At a rear portion of the driving section 5, a ROPS device 13 is provided. At a rear portion of the ROPS device 13, there is provided a conveyer duct 120 for conveying grass clippings cut (mowed) by the mower unit 6. At a rear portion of the conveyer duct 120, a vertical strut 110 is provided. And, there is provided a grass collecting container 100 supported to the vertical strut 110 to be positioned upwardly of the engine 3.

At the driving section 5, there are provided a pair of left and right speed changer levers 51 and a driver's seat 53. The driver's seat 53 is fixed to a seat support 52 mounted on the machine body frame 2. In the left and right side faces of the seat support 52, fenders 17 are formed. On top faces of the fenders 17, operational panels 8 are provided. Downwardly of the fenders 17, there are disposed fuel tanks 18 respectively. At a foot root area of the driver's seat 53, a step 50 is provided on the front frame 21. Adjacent the center of the front area of the step 50, a brake pedal 191 is disposed. On the lateral side of the brake pedal 191, there is disposed a parking brake lock pedal 192 for maintaining the brake pedal 191 at its stepped-on position.

The transmission 4 transmits power of the engine 3 to the front wheels 11 and the rear wheels 12. The transmission 4 includes a left rear axle transmission section 4a on the left side of the traveling machine body 10 and a right rear axle transmission section 4b on the right side of the traveling machine body 10. The left rear axle transmission section 4a and the right rear axle transmission section 4b respectively incorporate hydrostatic speed changer mechanisms (HST) independently operable as an example of stepless speed changer mechanism.

Such hydrostatic speed changer mechanism is capable of changing the engine power steplessly from a low speed to a high speed under a forward rotation (forward traveling) state and a reverse rotation (reverse traveling) state and transmitting the resultant speed-changed power to the left and right rear wheels 12 respectively of the rear wheel unit. With this, when the left and right rear wheels 12 are driven at an equal or substantially equal speed in the forward direction, a straight forward traveling is provided; and when the left and right rear wheels 12 are driven at an equal or substantially equal speed in the reverse direction, a straight reverse traveling is provided. Further, when the speeds of the left and right rear wheels12 are made different from each other, the traveling machine body 10 can be turned in a desired direction. For instance, when either one of the left and right rear wheels 12 is set to a low speed near the zero speed and the other rear wheel 12 is operated at a high speed in the forward side or reverse side, a small turn is made possible. Still further, when the left and right rear wheels 12 are driven in directions opposite to each other, it is possible to cause the traveling machine body 10 to make a spin turn, with the substantial center of the left and right rar wheels 12 being the center of the turn. The front wheels 11 are configured as a pair of left and right caster wheels, so that orientation thereof about a vertical axis can be freely changed. As a result, a direction will be corrected according to the traveling direction provided by driving of the left and right rear wheels 12.

Further, a PTO shaft 41 for transmitting power to the mower unit 6 protrudes forwardly from the front wall of a transmission case 40 of the transmission 4. This PTO shaft 41 and a PTO input shaft 61 of the mower unit 6 are connected to each other via a PTO relay shaft 62.

By operating the pair of left and right speed changer levers 51 disposed on the opposed sides of the driver's seat 53, speed changing operations of the transmission 4, in particular, speed changing operations on the left rear axle transmission section 4a and the right rear axle transmission section 4b are effected. When the speed changer lever 51 is maintained at a front/rear neutral position, the stepless speed changer device is set to its neutral stopped state. When the speed changer lever 51 is operated forwardly from the neutral position, a forward traveling speed change is realized. When it is operated reversely, a reverse traveling speed change is realized.

The ROPS device 13, which is provided rearwardly of the driver's seat 53, includes a pair of left and right struts 13a and a transverse member 13b connecting upper ends of the struts 13a to each other. Each strut 13a is pivotally foldable at its intermediate portion. A leg portion 13a2 which is the lower half of the strut 13a is bent to the inner side at a position of substantially same height as the upper end of the rear frame 22 and extends to reach the rear end of the front frame 21. The rear end of the front frame 21 and the leg portion 13a2 of the ROPS device 13 are connected to each other via a connection bracket. A straight strut portion 13a1 which is the upper half of the strut 13a is connected via a pivotal connection portion to the leg portion 13a2 to be pivotable between a vertical posture and a horizontal (or downward) posture.

The mower unit 6 includes a mower deck 60 consisting of a ceiling wall and a circumferential wall extending downwards from the outer circumference of the ceiling wall. This mower deck 60 includes a blade unit consisting of a left blade 641, a center blade 642 and a right blade 643. Thus, in the mower unit 60, there is provided a belt transmission unit 63 for distributing the power received by the PTO input shaft 61 to a first rotational shaft 631, a second rotational shaft 632 and a third rotational shaft 633 disposed side by side in the transverse direction and each having a vertical axis. The transmission unit 63 receives power from the transmission 4 via the PTO shaft 41, the PTO relay shaft 62 and the PTO input shaft 61. The first rotational shaft 631 is attached with the left blade 641. The second rotational shaft 632 is attached with the center blade 642. The third rotational shaft 633 is attached with the right blade 643. The left blade 641, the center blade 642 and the right blade 643 are respectively rotatable clockwise as seen in the plan view.

The mower unit 6 is vertically pivotable by the link mechanism 14 between a lowered work state in which the mower deck 60 is positioned near the ground surface and an elevated non-work state in which the mower deck 60 is lifted up off the ground surface. When the grass mowing machine travels with setting the mower deck 60 under the lowered work state and the blade unit of the mower unit 6 is rotatably driven, a mowing operation in a grass land or lawn land is carried out. In this, the cut grass clippings will be discharged as being guided by an air current generated in association with driving of the blade unit or an air current generated by a separately provided blower through a discharge cover (not shown) arranged at a lateral upper portion of the mower unit 6 into the conveyer duct 120. This conveyer duct 120 which is connected to the discharge cover at the lateral upper portion of the mower unit 6 extends to the rear side of the traveling machine body 10. And, the conveyer duct 120 extends from the rearward extending end portion of the traveling machine body 10 toward the center in the left/right direction of the traveling machine body 10 in correspondence between the ROPS device 13 and the vertical strut 110 and extends toward the upper side of the grass collecting container 100 to reach this grass collecting container 100 eventually. And, the grass clippings will be stored in the grass collecting container 100 via the conveyer duct 120.

As shown in Figs. 1-3, the grass collecting container100 has an inner space and has an approximately rectangular-solid like shape. The grass collecting container 100, as shown in Fig. 1, includes a container body 101 having an opening from a lateral portion to the rear side and forming mainly the front side of the grass collecting container 100 and a lid 103 which covers the opening of the container body 101. A bottom wall 100c of the inner space of the grass collecting container 100 comprised of the container body 101 and the lid 103 is arranged such that its rear side is positioned lower than its front side. Further, at an upper portion of a front face wall 100d of the container body 101, there is provided a charging inlet 102 through which grass clippings are introduced from the conveyer duct 120. Thus, grass clippings from the conveyer duct 120 will be introduced via the charging inlet 102 provided at the upper portion of the grass collecting container 100 and introduced to more far side on the rear side within the grass collecting container 100.

On the front side of the grass collecting container 100, the vertical strut 110 is disposed. And, at a rear portion of the lower end of the grass collecting container 100, a bracket 104 is provided. The grass collecting container 100 is pivotally supported by a first link mechanism 105a, a second link mechanism 105b, and a third link mechanism 105c which extend between the vertical strut 110 and the bracket 104. The third link mechanism 105c is connected to a piston rod 107 to be pivoted in the front/rear direction and upper/lower direction in association with expansion/contract of the piston rod 107. With these members, i.e. the first through third link mechanisms 105a-105c, the piston rod 107, the bracket 104, the vertical strut 110, etc., the grass collecting container 100 is supported to be pivotable to the rear side relative to the vertical strut 110.

For instance, in case grass clippings, etc. conveyed from the conveyer duct 120 are currently stored in the grass collecting container 100, the opening at the rear portion of this grass collecting container 100 is closed by the lid 103. On the other hand, when the grass clippings , etc. are to be discharged from the grass collecting container 100, the container body 101 and the lid 103 will be departed from each other, thus rendering the opening of the container body 101 into an opened state, thereby to allow discharging of the grass clippings, etc. inside the container body 101.

The conveyer duct 120 is connected to e.g. the right side of the mower deck 60 as shown in Fig. 2 and extends rearwards along the front/rear direction of the traveling machine body 10 and extends also upwards toward the upper portion of the grass collecting container 100 which is disposed rearwardly of the machine body frame 2. Further, the conveyer duct 120 is bent in the left/right direction along the front face wall 100d of the grass collecting container 100 and extends toward the charging inlet 102 (opening of the grass collecting container) provided at the upper portion of the grass collecting container 100. More particularly, the front side lower end of the conveyer duct 120 is connected to the mower deck 60 and at a rear side upper end of the conveyer duct 120 (the grass collecting container side end portion of the conveyer duct), an opening 120a is provided. This opening 120a is provided in correspondence with the charging inlet 102 (opening of the grass collecting container) provided at the upper portion of the grass collecting container 100 or connected to this charging inlet 102. With this arrangement, grass clippings cut by the mower unit 6 will be stored into the grass collecting container 100 from the mower unit 6 via the conveyer duct 120.

Inside the grass collecting container 100, a guide member 130 is provided at the position opposed to the charging inlet 102. This guide member 130 is configured to control flow of grass clippings introduced into the grass collecting container 100 as being conveyed by air current from the opening 120a of the conveyer duct 120. This guide member 130 can be a plate-like member for instance. Further, the guide member 130 is disposed in such a manner that the charging face of the charging inlet 102 of the grass collecting container 100 is placed in opposition to the plate-like face of the guide member 130. For instance, the guide member 130 is disposed to be suspended from the inner face of the ceiling face wall 100a of the grass collecting container 100, in correspondence with the charging inlet 102 located at the upper portion of the grass collecting container 100. Further, the guide member 130 is provided on the charging inlet 102 side inside the grass collecting container 100 to receive the air current from the conveyer duct 120 and to be able to change the direction of this air current. For instance, the guide member 130 can be disposed such that the direction of air current from the opening 120a of the conveyer duct 120 may be in opposition to the plate-like face of this guide member 130.

In the instant embodiment, the guide member 130 is configured as a plate-like member having a width which corresponds to the left/right width of the grass collecting container 100. However, the size of the guide member 130 is not limited thereto. For instance, its size may correspond at least to the opening 120a of the conveyer duct 120.

With provision of the guide member 130 described above, the flow of the air current and grass clippings introduced from the conveyer duct 120 can be controlled. As a result, grass clippings can be stored sequentially from more far side away from the charging inlet 102 of the grass collecting container 100, so that the grass clippings can be stored in the grass collecting container 100 in an efficient manner.

Moreover, preferably, the guide member 130 is configured to have its posture changeable by a posture changing mechanism 131. For instance, the guide member 130, as seen in the side view of Fig. 1, will have its posture changed as an angle formed between the charging face of the charging inlet 102 of the grass collecting container 100 or the opening face of the opening 120a of the conveyer duct 120 and the plate-like face of the guide member 130 is changed. In this, it is preferred that the distance between the charging inlet 102 of the grass collecting container 100 and the guide member 130 be changed.

Further, with such change of the posture of the guide member 130, a degree (amount) of contact between the grass clippings introduced from the conveyer duct 120 into the grass collecting container 100 and the guide member 130 can be changed, thus allowing control of the flow of grass clippings inside the grass collecting container 100. In this way, as the flow of grass clippings is controlled with change of the posture of the guide member 130, grass clippings can be stored sequentially from more far side of the grass collecting container 100. Consequently, it is possible to suppress occurrence of inconvenience of the opening of the grass collecting container 100 being blocked with space remaining inside this grass collecting container 100 available for storage of further grass clippings.

Moreover, as the posture of the guide member 130 is changeable, the posture of the guide member 130 can be adjusted, depending on e.g. the condition of the grass clippings. For example, when grass clippings are wet and heavy, the posture of the guide member 130 will be adjusted to be aligned with the flow of grass clippings from the conveyer duct 120. For instance, the posture of the guide member 130 will be changed to follow the ceiling face wall 100a of the grass collecting container 100. With this, the flow of grass clippings will be impeded less likely by the guide member 130. Thus, even when the grass clippings are wet, these grass clippings will be stored sequentially from the far side of the grass collecting container 100.

On the other hand, for instance, when the grass clippings are dry and light, the guide member 130 will have its posture changed in such a manner that the grass clippings from the conveyer duct 120 will collide the guide member 130 and be stored from more far side of the grass collecting container 100 sequentially at the same time. For example, the posture of the guide member 130 will be adjusted to place the plate face of the guide member 130 substantially parallel with the charging face of the charging inlet 102 of the grass collecting container 100. In this, the posture of the guide member 130 will be adjusted in such a manner that the direction of grass clippings and air current from the charging inlet 102 and the plate-like face of the guide member 130 will intersect each other. Preferably, the adjustment will be made such that the vertical orientation of the plate face of the guide member 130 will extend progressively to the far side of the grass collecting container 100 from the upper side to the lower side. In this case, for example, the dry grass clippings will be guided downwards along the posture of the guide member 130 and will also be pushed by the air current, thus being guided to more far side of the grass collecting container 100. Therefore, even when grass clippings are dry, with effective suppression of convection inside the grass collecting container 100, the grass clippings will be stored sequentially from more far side of the grass collecting container 100.

The specific arrangement of the posture changing mechanism 131 is not particularly limited as long as it is capable of changing the posture of the guide member 130. For example, it can be constituted of a pivotal shaft 131 which extends in the machine body width direction. In this case, the guide member 130 will be supported to be pivotable about the pivotal shaft 131. With this, the change of the posture of the guide member 130 can be realized with such simple pivotal arrangement.

Further and alternatively, the posture changing mechanism 131 can be configured e.g. as a mechanism capable of moving the guide member 130 in the front/rear direction of the traveling machine body 10. For instance, the guide member 130 will be supported to the ceiling face wall 100a of the grass collecting container 100 to be movable in the front/rear direction.

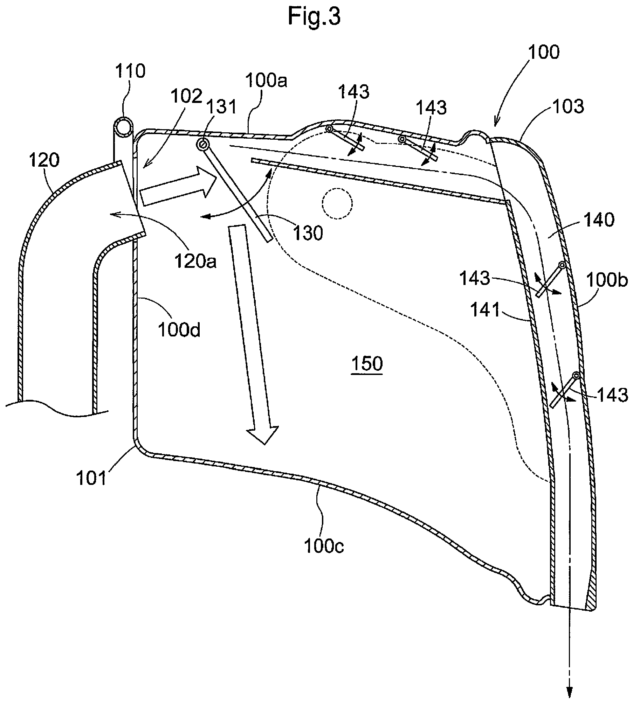

As shown in Fig. 3, preferably, the grass collecting container 100 is provided with an air communication portion 140 for allowing air communication from inside of the grass collecting container 100 to the outside. This air communication portion 140 is formed by the space between an inner wall which extends from the ceiling face wall 100a to the rear face wall 100b of the grass collecting container 100 and a partition member 141. The front end of the air communication portion 140 is slightly rearwardly of the front end of the ceiling face wall 100a so as to introduce air from the conveyer duct 120. The partition member 141 is provided along the inner wall and separates the air communication portion 140 from a storage space 150 for storing grass clippings of the grass collecting container 100. With provision of the air communication portion 140 in this way, air which has conveyed grass clippings to the grass collecting container 100 can now be discharged to the outside of the grass collecting container 100 via the air communication portion 140. With this, convection of the air which has conveyed grass clippings to the grass collecting container 100 inside this grass collecting container 100 can be suppressed, so that grass clippings can be stored in the grass collecting container 100 with effective suppression of convection of the grass clippings.

Further, as shown in Fig. 3, preferably, an air amount adjustment mechanism 143 is provided in the air communication portion 140. Such air amount adjustment mechanism 143 will be provided at least one along inner face extending from the ceiling face wall 100a to the rear face wall 100b. The air amount adjustment mechanism 143 is a plate-like member and has its one end attached to a portion of either the ceiling face wall 100a and the inner face of the rear face wall 100b and is configured to be pivotable. Further, the air amount adjustment mechanism 143 has its plate-like face adjustable in the direction along the air current so as to be able to suppress resistance of air current flowing in the air communication portion 140. Conversely, with adjustment for causing the slope of the air amount adjustment mechanism 143 to transverse the flow of air current, it will become also possible to increase the resistance of the air current flowing in the air communication portion 140 so as to suppress the amount of air current to be discharged from the air amount adjustment mechanism 143 to the outside of the grass collecting container 100. With this, the amount of air current to be discharged to the outside of the grass collecting container 100 can be adjusted by such a degree that allows efficient storing of grass clippings inside the grass collecting container 100, for instance.

### [Other Embodiments]

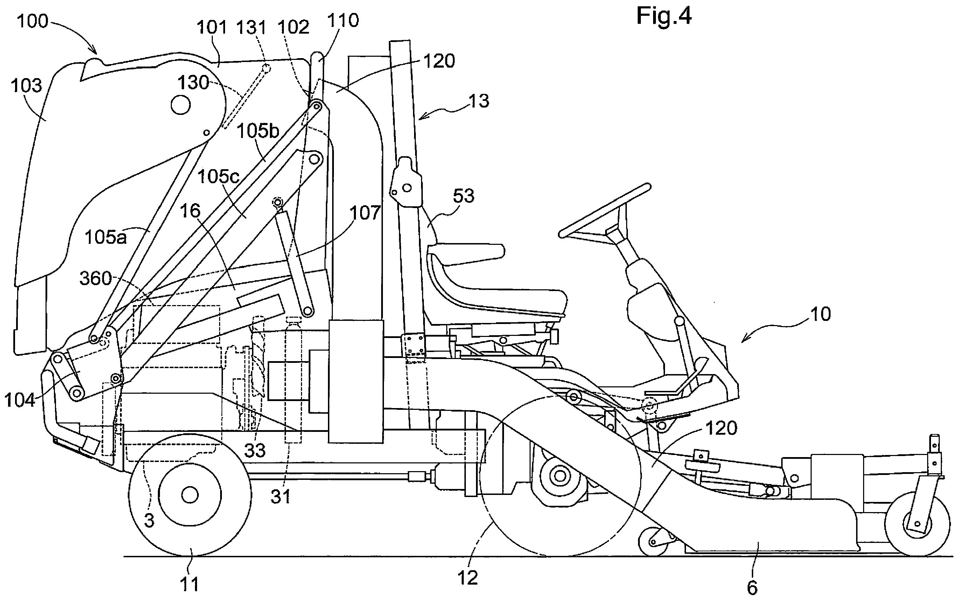

(1) In the foregoing embodiment, a so-called mid-mount zero-turn mower was shown as an example of the grass mowing machine relating to the embodiment. However, the present invention is not limited to such mid-mount zero-turn mower, but is applicable also to a grass mowing machine with a mower deck being supported on the front side of the traveling machine body 10. Respecting such example, an example will be explained briefly with reference to Fig. 4. In Fig. 4, members identical to those in the foregoing embodiment are provided same signs.
   As shown in Fig. 4, the mower deck 6 is mounted forwardly of the traveling machine body 10. The conveyer duct 120 connected to a discharge cover (not shown) on the lateral side of the mower unit 6 extends to the rear side of the traveling machine body 10 and eventually reaches the grass collecting container 100, similarly to the foregoing embodiment.
(2) In the foregoing embodiment, as a grass mowing machine, there was shown as an example of a grass mowing machine called a zero-turn mower with left and right wheels 12 being controlled for driving independently of each other. However, the present invention is applicable also to a grass mowing machine in which the front wheels 11 are configured as steering wheels and the left and right rear wheels 12 are connected to each other via a differential mechanism.
(3) In the foregoing embodiment, three blades were provided in the mower unit 6. However, two blades or four or more blades can be provided in it instead.

### [DESCRIPTION OF SIGNS]

- 6:: mower unit
- 10:: traveling machine body
- 100:: grass collecting container
- 130:: guide member
- 131:: posture changing mechanism

## Claims

1. A grass mowing machine comprising:
a traveling machine body (10);
a mower unit (6) supported to the traveling machine body (10);
a grass collecting container (100) supported to the traveling machine body and configured to store grass clippings cut by the mower unit (6);
a conveyer duct (120) provided between the mower unit (6) and the grass collecting container (100) and configured to allow passage of the grass clippings therethrough;
a guide member (130) for guiding the grass clippings, the guide member (130) being provided inside the grass collecting container (100) at a position opposed to a charging inlet (102) of the grass collecting container (100) corresponding to a grass collecting container side end of the conveyer duct (102); and
a posture changing mechanism (131) for changing posture of the guide member (130),
the grass collecting container (100) including an air communication portion (140) for allowing communication of air from the inside of the grass collecting container (100) to the outside;
**characterized in that**
an air amount adjustment mechanism (143) is provided for adjusting an amount of air which flows through the air communication portion (140).

2. The grass mowing machine of claim 1, wherein in response to change of the posture of the guide member (130) a distance between the charging inlet (102) of the grass collecting container (100) and the guide member (130) can be changed.

3. The grass mowing machine of claim 1 or 2, wherein:
the grass collecting container side end portion of the conveyer duct (120) is connected to the charging inlet (102) which is formed in a front face wall (100d) of the grass collecting container (100);
the guide member (130) is provided rearwardly of the charging inlet (102) of the grass collecting container (100); and
the posture changing mechanism (131) supports the guide member (130) pivotally about a pivot axis which extends in a width direction of the traveling machine body (10).

4. The grass mowing machine of any of claims 1-3, wherein:
the air communication portion (140) is formed by an inner wall that extends from a ceiling face wall (100a) to a rear face wall (100b) of the grass collecting container (100) and a partition member (141) provided along the inner wall; and
a front end of the partition member (141) is located rearwardly of a front end of the ceiling face wall (100a).

5. The grass mowing machine of claim 4, wherein the air amount adjustment mechanism (143) is attached at its one end to the inner wall to be pivotable.

## Patentansprüche

1. Rasenmähmaschine, umfassend:
einen fahrenden Maschinenkörper (10),
eine Mäheinheit (6), die von dem fahrenden Maschinenkörper (10) getragen wird,
einen Grassammelbehälter (100), der von dem fahrenden Maschinenkörper getragen wird und dazu ausgestaltet ist, von der Mäheinheit (6) geschnittenen Grasschnitt zu speichern,
einen Förderkanal (120), der zwischen der Mäheinheit (6) und dem Grassammelbehälter (100) vorgesehen und dazu ausgestaltet ist, dort hindurch den Durchgang des Grasschnitts zu erlauben,
ein Führungselement (130) zur Führung des Grasschnitts, wobei das Führungselement (130) innerhalb des Grassammelbehälters (100) an einer Position gegenüber einem Beladeeinlass (102) des Grassammelbehälters (100) entsprechend einem Ende des Förderkanals (102) auf der Seite des Grassammelbehälters vorgesehen ist, und
einen Stellungsänderungsmechanismus (131) zum Verändern der Stellung des Führungselements (130),
wobei der Grassammelbehälter (100) eine Luftkommunikationssektion (140) zur Ermöglichung der Kommunikation von Luft aus dem Inneren des Grassammelbehälters (100) an die Außenseite beinhaltet,
**dadurch gekennzeichnet, dass**
ein Luftmengeneinstellmechanismus (143) zum Einstellen einer Menge an Luft, die durch die Luftkommunikationssektion (140) strömt, vorgesehen ist.

2. Rasenmähmaschine nach Anspruch 1, wobei in Antwort auf eine Veränderung der Stellung des Führungselements (130) ein Abstand zwischen dem Beladeeinlass (102) des Grassammelbehälters (100) und dem Führungselement (130) verändert werden kann.

3. Rasenmähmaschine nach Anspruch 1 oder 2, wobei:
die Endsektion des Förderkanals (120) auf der Seite des Grassammelbehälters mit dem Beladeeinlass (102) verbunden ist, der in einer stirnseitigen Wand (100d) des Grassammelbehälters (100) ausgebildet ist,
das Führungselement (130) hinter dem Beladeeinlass (102) des Grassammelbehälters (100) vorgesehen ist, und
der Stellungsänderungsmechanismus (131) das Führungselement (130) um eine Schwenkachse, die sich in einer Breitenrichtung des fahrenden Maschinenkörpers (10) erstreckt, schwenkbar trägt.

4. Rasenmähmaschine nach einem der Ansprüche 1 - 3, wobei:
die Luftkommunikationssektion (140) durch eine Innenwand, die sich von einer Deckenwand (100a) bis zu einer hinterseitigen Wand (100b) des Grassammelbehälters (100) erstreckt, und ein Trennelement (141), das entlang der Innenwand vorgesehen ist, gebildet wird, und
ein Stirnende des Trennelements (141) sich hinter einer Stirnseite der Deckenwand (100a) befindet.

5. Rasenmähmaschine nach Anspruch 4, wobei der Luftmengeneinstellmechanismus (143) mit seinem einen Ende an der Innenwand angebracht ist, um schwenkbar zu sein.

## Revendications

1. Tondeuse à gazon comprenant :
un corps de machine mobile (10) ;
une unité de tondeuse (6) supportée sur le corps de machine mobile (10) ;
un récipient de collecte de gazon (100) supporté sur le corps de machine mobile et configuré pour stocker du gazon coupé par l'unité de tondeuse (6) ;
un conduit transporteur (120) prévu entre l'unité de tondeuse (6) et le récipient de collecte de gazon (100) et configuré pour permettre le passage du gazon coupé à travers ce dernier ;
un élément de guidage (130) pour guider le gazon coupé, l'élément de guidage (130) étant prévu à l'intérieur du récipient de collecte de gazon (100) dans une position opposée à une entrée de chargement (102) du récipient de collecte de gazon (100) correspondant à une extrémité du côté du récipient de collecte de gazon du conduit transporteur (102) ; et
un mécanisme de changement de posture (131) pour changer la posture de l'élément de guidage (130),
le récipient de collecte de gazon (100) comprenant une partie de communication d'air (140) pour permettre la communication d'air de l'intérieur du récipient de collecte de gazon (100) à l'extérieur ;
**caractérisée en ce que** :
un mécanisme d'ajustement de quantité d'air (143) est prévu pour ajuster une quantité d'air qui s'écoule à travers la partie de communication d'air (140).

2. Tondeuse à gazon selon la revendication 1, dans laquelle, en réponse au changement de la posture de l'élément de guidage (130), une distance entre l'entrée de chargement (102) du récipient de collecte de gazon (100) et l'élément de guidage (130) peut être modifiée.

3. Tondeuse à gazon selon la revendication 1 ou 2, dans laquelle :
la partie d'extrémité du côté du récipient de collecte de gazon du conduit transporteur (120) est raccordée à l'entrée de chargement (102) qui est formée dans une paroi de face avant (100d) du récipient de collecte de gazon (100) ;
l'élément de guidage (130) est prévu vers l'arrière de l'entrée de chargement (102) du récipient de collecte de gazon (100) ; et
le mécanisme de changement de posture (131) supporte l'élément de guidage (130) de manière pivotante autour d'un axe de pivot qui s'étend dans une direction de largeur du corps de machine mobile (10).

4. Tondeuse à gazon selon l'une quelconque des revendications 1 à 3, dans laquelle :
la partie de communication d'air (140) est formée par une paroi interne qui s'étend à partir d'une paroi de face de plafond (100a) jusqu'à une paroi de face arrière (100b) du récipient de collecte de gazon (100) et un élément de séparation (141) prévu le long de la paroi interne ; et
une extrémité avant de l'élément de séparation (141) est positionnée vers l'arrière d'une extrémité avant de la paroi de face de plafond (100a).

5. Tondeuse à gazon selon la revendication 4, dans laquelle le mécanisme d'ajustement de quantité d'air (143) est fixé, au niveau de sa une extrémité, à la paroi interne pour pouvoir pivoter.
